# EUROPÄISCHE PATENTANMELDUNG

(11) **EP 2 388 162 A1**
(43) Veröffentlichungstag der Anmeldung: **23.11.2011**
(21) Anmeldenummer: 11004147.2
(22) Anmeldetag: 19.05.2011
(51) Int. Cl.: B60P 1/64, B62D 53/06

(54) **Sattelauflieger zum Transport von Containern**

(30) Priorität: 20.05.2010 DE 202010007129 U
(71) Anmelder: M&V GmbH "Siegmar", 09387 Jahnsdorf (DE)
(72) Erfinder: Die Erfindernennung liegt noch nicht vor
(74) Vertreter: Findeisen Hübner Neumann

(57) **Zusammenfassung**

Die Erfindung betrifft einen Sattelauflieger mit einem Containerchassis zum Transport von Containern. Aufgabe der Erfindung ist es, einen diesbezüglichen Sattelauflieger zu schaffen, der neben der Erfüllung von neuen gesetzlichen Vorschriften insbesondere eine weiter verbesserte Handhabung bei einer Verschiebung des Containers zum Erreichen einer fahrdynamisch optimalen Anordnung ermöglicht. Die Aufgabe wird gelöst, indem an dem in Fahrtrichtung vorderen Abschnitt des Containerchassis zwei Verriegelungen angeordnet sind, mit denen ein aufzunehmender Container ständig arretierbar ist und indem am hinteren Abschnitt des Containerchassis ein auf mindestens zwel Rollschienen gelagerter Schlitten (2) geführt wird, wobei die Rollschienen an mindestens einem Hauptträger des Containerchassis abgestützt sind und wobei die Rollschienen und der Schlitten (2) derart angeordnet sind, dass sie nach Absenkung der zugeordneten Luftfederung (4) mit Achsrohren (1) in Wirkverbindung kommen, wodurch der Container vom Containerchassis abgehoben wird.

## Beschreibung

Die Erfindung betrifft einen Sattelauflieger zum Transport von Containern, bestehend aus einem Containerchassis, das mit einem Zugfahrzeug koppelbar ist und mindestens eine Achse mit Laufrädern zur Abstützung auf der Fahrbahn aufweist, wobei ein als Auflagerahmen für einen Container ausgestalteter Schlitten mittels Rollen auf dem Containerchassis derart gelagert ist, dass durch eine Verlagerung des Schlittens die Relativposition zwischen dem Containerchassis und dem abzustützenden Container veränderbar ist.

Sattelauflieger sind für verschiedenartige Anwendungen und in zahlreichen Konstruktionen bekannt. Für den Transport von Containern werden Sattelauflieger überwiegend mit einem Containerchassis und in Mehrachsbauweise ausgeführt, vorzugsweise mit zwei oder drei Achsen. Diese Konstruktionen ermöglichen einen akzeptablen Kompromiss zwischen den teilweise zueinander konträren Forderungen nach großer Nutzmasse, gutem Handling im Straßenverkehr, optimaler Lastverteilung zwischen Zugfahrzeug und Sattelauflieger sowie praxisgerechter Be- und Entladung an Laderampen. Für die Konstruktion sind außerdem gesetzliche Bestimmungen hinsichtlich zulässiger Achslasten und Achslastverteilungen zu beachten. Damit die Vielzahl unterschiedlicher Forderungen weitgehend erfüllt werden kann, sind bereits verschiedene technische Lösungen vorgeschlagen worden, mit denen die Relativposition zwischen dem Containerchassis und dem auf diesem abzustützenden Container verändert werden kann.

So beschreibt DE 30 37 081 A1 einen Sattelauflieger, bei dem mindestens zwei Segmente des Aufliegerrahmens teleskopartig ineinander geschoben werden können. Eine ähnliche technische Lösung ist aus DE 93 06 626 U1 bekannt, wobei hier zwei auf Rollen abgestützte Chassisteile relativ zueinander verlagerbar sind. Diese Konstruktionen ermöglichen eine gute fahrdynamische Position des Containers auf dem Containerchassis. Nachteilig ist jedoch der notwendige Handhabungs- und Zeitaufwand zur Änderung der Länge des Containerchassis.

Dieser Aufwand kann vorteilhaft vermindert werden, sofern dem jeweiligen Sattelauflieger eine Vorrichtung zugeordnet wird, mit der ein oder mehrere Container in Abhängigkeit vom konkreten Ladezustand (Transport von einem Container oder mehreren Containern / ein Container voll beladen und ein Container leer usw.) auf dem Containerchassis verschoben werden können.

Bei einer entsprechenden Konstruktion gemäß DE 92 14 233 U1 hat das Containerchassis einen Grundrahmen, auf dem ein Auflagerahmen mittels Rollen verschiebbar gelagert ist. Auf diesem Auflagerahmen wird der zu transportierende Container abgestützt.

DE 1 913 576 A1 beschreibt eine technische Lösung, die zur Aufnahme von Containern unterschiedlicher Länge ausgestaltet ist. Somit können anstelle der häufig eingesetzten 20"- Container auch kleinere Container lagefixiert transportiert werden. Hierfür ist ein Schlitten vorgesehen, der zwei im Abstand hintereinander angeordnete und wahlweise benutzbare Containerverriegelungen aufweist. Der Schlitten wird durch eine relative Bewegung des hinteren Chassisteils zum vorderen Chassisteil in eine auf den konkreten Container angepasste Stellung gebracht.

Aus EP 0 217 075 A2 ist ein Sattelauflieger mit einteiligem Containerchassis bekannt, auf dem ein über Rollen abgestützter Schlitten verlagert werden kann. Dieser Schlitten weist an seinen Endabschnitten jeweils zwei Containerverriegelungen auf. Durch die Änderung der Relativposition zwischen Schlitten und Containerchassis ist alternativ der Transport von zwei separaten 20"- Containern hintereinander oder ein Transport von lediglich einem 20"- Container möglich. Bei der letztgenannten Variante, also beim Transport von nur einem Container, wird der Schlitten auf dem Containerchassis in einer in Fahrtrichtung nach vorn gezogenen Stellung arretiert. Folglich wird eine fahrdynamisch vorteilhafte Abstützung eines Containers im Schwerpunkt des Containerchassis gewährleistet.

Obwohl somit bereits verschiedenartige Konstruktionen für den Transport von Containern mit einem Sattelauflieger verfügbar sind, besteht weiterhin Entwicklungsbedarf, der sich insbesondere aus Forderungen für eine weiter verbesserte Handhabung und der Erfüllung gesetzlicher Vorschriften ergibt. So ist beispielsweise in der EG-Richtlinie 96/53 festgelegt, dass das Gewicht auf der (oder den) Antriebsachse(n) eines Fahrzeuges oder einer Fahrzeugkombination aus Zugfahrzeug und gezogener Einheit (also zum Beispiel einem Sattelauflieger für den Containertransport) nicht weniger als 25% vom zulässigen Gesamtgewicht im grenzüberschreitenden Verkehr betragen darf.

Aufgabe der Erfindung ist es, einen Sattelauflieger mit einem Containerchassis zum Transport von Containern zu schaffen, der neben der Erfüllung von neuen gesetzlichen Vorschriften insbesondere eine weiter verbesserte Handhabung bei einer Verschiebung des Containers zum Erreichen einer fahrdynamisch optimalen Anordnung ermöglicht. Diese Aufgabe wird gelöst, indem an dem in Fahrtrichtung vorderen Abschnitt des Containerchassis zwei Verriegelungen angeordnet sind, mit denen ein aufzunehmender Container ständig arretierbar ist und indem am hinteren Abschnitt des Containerchassis ein auf mindestens zwei Rollschienen gelagerter Schlitten geführt wird, wobei die Rollschienen an mindestens einem Hauptträger des Containerchassis abgestützt sind und wobei die Rollschienen und der Schlitten derart angeordnet sind, dass sie nach Absenkung der zugeordneten Luftfederung mit Achsrohren in Wirkverbindung kommen, wodurch der Container vom Containerchassis abgehoben wird. Weitere vorteilhafte Ausgestaltungen sind Gegenstand von Unteransprüchen, die im Ausführungsbeispiel näher beschrieben werden.

Der Container ist grundsätzlich auf dem Hauptträger des Containerchassis lagestabil abgestützt, wobei der Hauptträger in Abhängigkeit der konkreten Bauart beispielsweise zwei separate seitliche Träger oder einen zentralen mittleren Träger aufweisen kann. Dabei wird der Container ständig durch die beiden vorderen Containerverriegelungen am Containerchassis gesichert. Diese Verbindung übernimmt gleichzeitig den Kraftschluss zur Verschiebung des Containers, ausgehend vom Zugfahrzeug über das Frontteil des Containerchassis bis hin zum Container. Das Heckteil des Containerchassis bleibt angebremst stehen. Im Heckbereich übernimmt der Schlitten die Rollfunktion. Dabei ist dem Containerchassis ein vorzugsweise pneumatisch betätigbarer Zylinder zugeordnet, mit dem der Schlitten in unterschiedliche Positionen verlagert werden kann. Über diesen Pneumatikzylinder wird der Schlitten auch bei einer Nichtnutzung (z.B. Fahrt ohne Container) arretiert. Nach erfolgter Absenkung der Luftfederung stützen sich der Schlitten und die Rollschienen auf den Achsrohren ab und heben somit den Container vom Containerchassis frei. Dadurch ist der Container lediglich noch auf den vorderen Verriegelungen und auf dem Schlitten im Heckbereich gelagert. Durch Ein- und Ausfahren des Frontteils am Containerchassis wird der Container über dem Heckteil in seine Zielposition verfahren.

Mit der erfindungsgemäßen Konstruktion wird eine einfach zu handhabende Verschiebung eines Containers, insbesondere eines 20"- Containers, zwischen einer heckbündigen Position und einer mittigen Position auf einem Sattelauflieger des Typs Containerchassis realisiert. Somit kann in einfacher Weise unter Beachtung der konkreten Ladesituation eine fahrdynamisch optimale Anordnung eines Containers gewährleistet werden. Weiterhin ermöglicht diese Ausgestaltung auch die Erfüllung aktueller gesetzlicher Bestimmungen zu zulässigen Achslasten und Achslastverteilungen.

Der Transporteur kann nunmehr problemlos die optimale Position des Containers auf dem Containerchassis auswählen. Bei heckbündiger Anordnung sind Beladung und Entladung direkt an einer Laderampe mittels Gabelstapler oder ähnlicher Technik möglich, auch mit direktem Einfahren in den Container. Die mittige Anordnung ergibt Vorteile im Fahrbetrieb durch eine optimale Verteilung der Lasten auf Zug- und Anhängefahrzeug.

Weiterhin wird mit dieser Konstruktion eine robuste und technisch überschaubare Lösung verfügbar, die den anspruchsvollen Einsatzbedingungen eines Sattelaufliegers für den Containertransport entspricht und zur Erhöhung der Sicherheit im Straßenverkehr beiträgt. Dabei vermindert die verbesserte Achslastverteilung die Gefahr durchdrehender oder nicht haftender Reifen sowie ein Überbremsen und Einknicken des gesamten Sattelzuges. Gleichzeitig wird auch während der Verfahrbewegung des Containers eine hohe Stabilität gewährleistet, weil sich Achsen und Reifen des Sattelaufliegers nicht bewegen.

Die vorgeschlagene Konstruktion ist grundsätzlich für Neufahrzeuge geeignet. Ebenso kann sie mit akzeptablem Kosten- und Zeitaufwand an bereits in Nutzung befindlichen Containerchassis ohne Einschränkungen bezüglich der Sicherheit, der Fahrstabilität, der Funktionalität oder der Nutzungsdauer nachgerüstet werden.

Nachfolgend wird ein Ausführungsbeispiel der Erfindung unter Hinweis auf die Zeichnung beschrieben. Es zeigen:

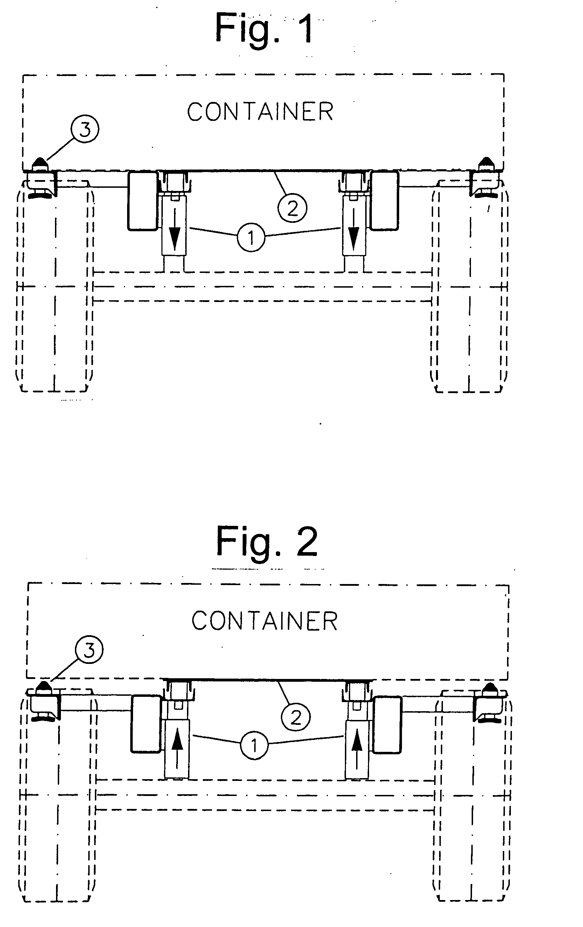

- Fig. 1: eine Ansicht auf das Heckteil in einer Position, bei der ein Container auf dem Containerchassis aufliegt und mit diesem durch eine Twistlock-Verriegelung fest verbunden ist
- Fig. 2: eine Ansicht auf das Heckteil in einer Position mit gelösten Twistlock- Verriegelun- gen, wobei der Container durch die Absenkung des Containerchassis angehoben und somit frei zur Verschiebung ist

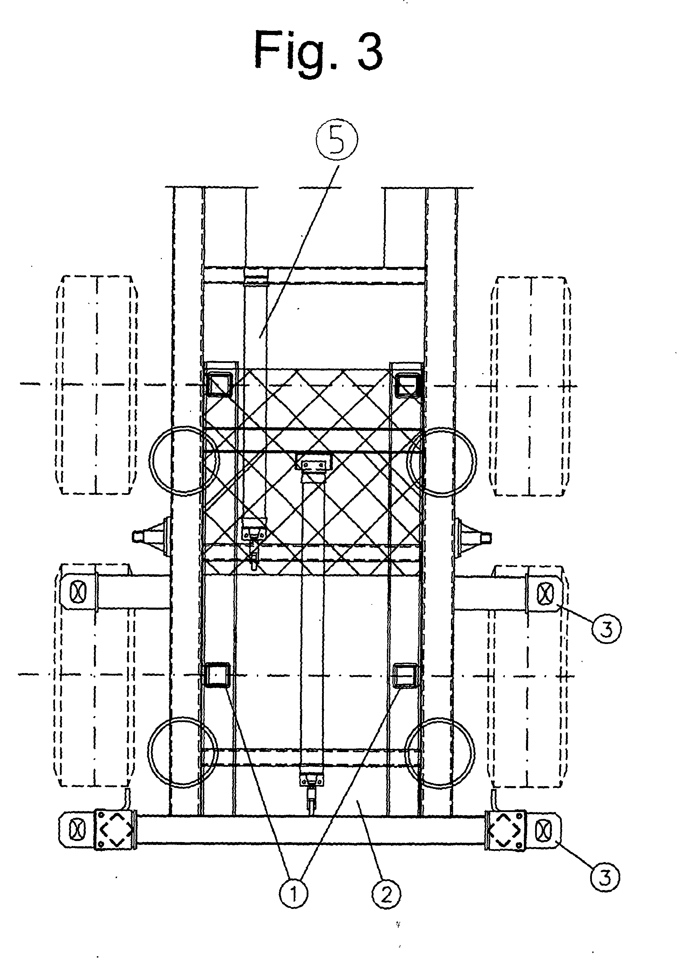

- Fig. 3: eine Ansicht auf das Heckteil in der Draufsicht, aus der die räumliche Zuordnung der Baugruppen zueinander ersichtlich ist

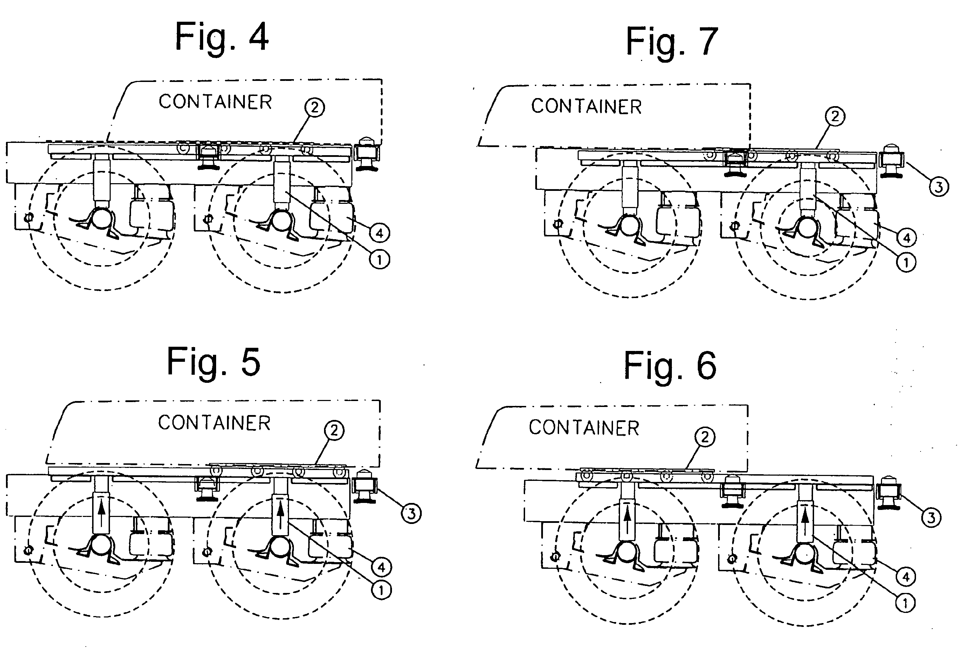

- Fig. 4: eine Seitenansicht, der Container befindet sich in heckbündiger Position und ist mittels Twistlock verriegelt
- Fig. 5: eine Seitenansicht, der Container befindet sich in heckbündiger Position und ist vom Containerchassis gelöst sowie angehoben
- Fig. 6: eine Seitenansicht, der Container befindet sich in mittiger Position und ist vom Containerchassis gelöst sowie angehoben
- Fig. 7: eine Seitenansicht, der Container befindet sich in mittiger Position und ist mittels Twistlock verriegelt auf dem Containerchassis

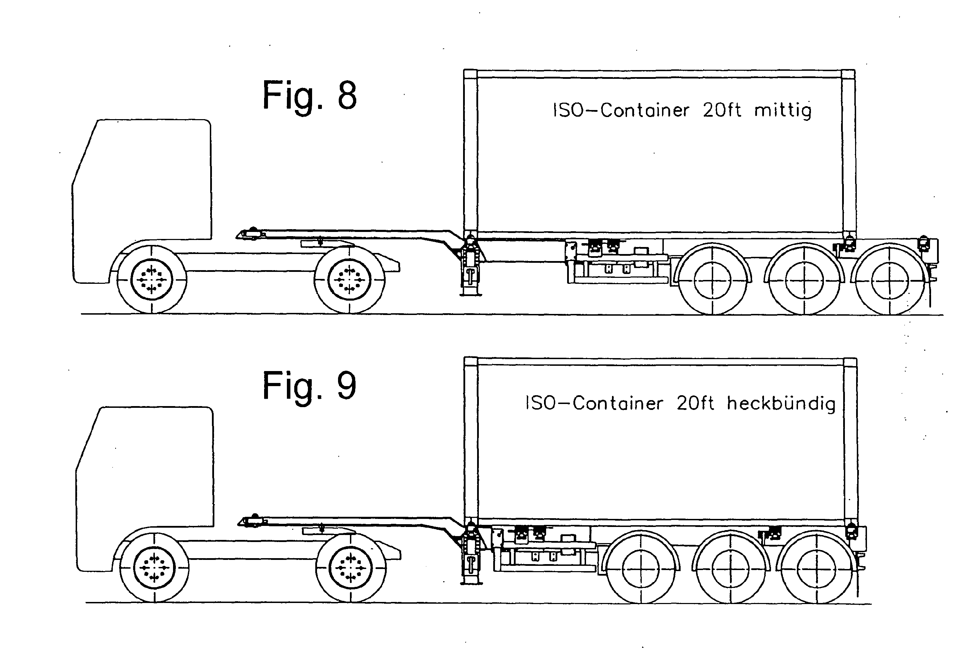

- Fig. 8: eine Seitenansicht eines kompletten Sattelaufliegers mit Zugfahrzeug, der Container befindet sich in mittiger Position
- Fig. 9: eine Seitenansicht eines kompletten Sattelaufliegers mit Zugfahrzeug, der Container befindet sich in heckbündiger Position

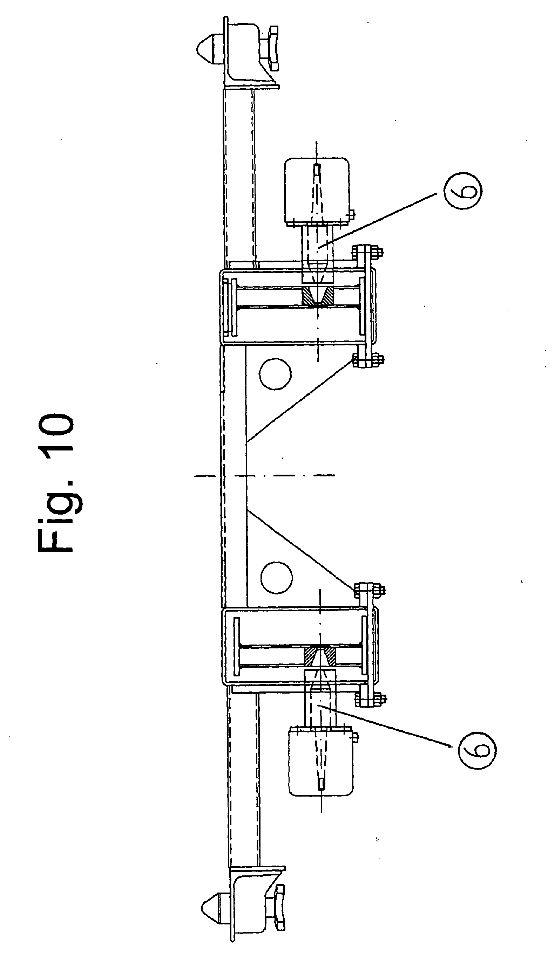

- Fig.10: eine Ansicht mit Darstellung der Arretiervorrichtung für den Mittelausschub

Der in der Zeichnung dargestellte Sattelauflieger ist zum Transport von Containern konzipiert. Hierfür ist ein Containerchassis vorgesehen, das mit einem Zugfahrzeug koppelbar ist und mindestens eine Achse mit Laufrädern zur Abstützung auf der Fahrbahn aufweist. Weiterhin umfasst das Containerchassis einen Schlitten 2, der als Auflagerahmen für einen Container ausgestaltet ist und mittels Rollen auf dem Containerchassis verschoben werden kann. Folglich kann durch eine Verlagerung des Schlittens 2 die Relativposition zwischen dem Containerchassis und dem abzustützenden Container verändert werden. Ein derartiger Aufbau eines Sattelaufliegers zum Containertransport ist grundsätzlich bekannt, so dass an dieser Stelle auf nähere diesbezügliche Darlegungen verzichtet werden kann.

Wesentlich im vorliegenden Sachverhalt ist jedoch, dass an dem in Fahrtrichtung vorderen Abschnitt des Containerchassis zwei Verriegelungen angeordnet sind, mit denen ein aufzunehmender Container ständig arretierbar ist. Diese beiden vorderen Verriegelungen sind derart ausgestaltet, dass ausgehend vom Zugfahrzeug über diese Verbindung und über den vorderen Abschnitt des Containerchassis der Kraftfluss zur Verschiebung des Containers aufgebracht wird.

Der an sich bekannte Schlitten 2 wird am hinteren Abschnitt des Containerchassis geführt. Dieser Schlitten 2 ist hier zwischen den Hauptträgern auf zwei Rollschienen gelagert. Dabei sind die Rollschienen und der Schlitten 2 derart angeordnet, dass sie nach Absenkung der zugeordneten Luftfederung 4 mit Achsrohren 1 in Wirkverbindung kommen. Dadurch wird der Container vom Containerchassis abgehoben.

Weiterhin ist dem Containerchassis eine Bedieneinheit zugeordnet, über die ein Bediener die zur Verschiebung des Containers notwendigen Stellbewegungen und Arretiervorgänge auslösen kann.

Bei Anwendung der erfindungsgemäßen Konstruktion muss der Bediener zunächst die beiden Containerverriegelungen 3 am Heckteil des Containerchassis öffnen und die Zapfen absenken. Danach wird durch Betätigung der Bedieneinheit das Containerchassis mitsamt seiner Beladung (vorzugsweise ein 20"- Container) über die Luftfederung 4 abgesenkt. Hierbei ist es unerheblich, ob der Container heckbündig oder mittig auf dem Containerchassis angeordnet ist. Der Schlitten 2 wird durch den Pneumatikzylinder 5 in die ausgewählte Position gefahren, vorzugsweise also in eine heckbündige oder mittige Anordnung. Die Feststellbremse wird im angebremsten Zustand gesichert, die Verriegelungszylinder 6 der Arretiervorrichtung geben die Verschiebung des Mittelausschubes am Containerchassis frei und der Schlitten 2 mit dem Container kann per Zugmaschinenkraft in die Zielposition verfahren werden. Während der Verfahrbewegung schließen die Verriegelungszylinder 6 des Mittelausschubes und blockieren den Schlitten 2 an der Zielposition. Abschließend wird mit der Bedieneinheit die Position "ÖFFNEN" eingestellt. Der Bediener kann nunmehr die Twistlocks der beiden noch offenen Containerverriegelungen 3 am Heckteil mit dem Container verbinden und sichern. Abschließend hebt die Luftfederung 4 das Containerchassis zurück in die Fahrstellung.

## Patentansprüche

1. Sattelauflieger zum Transport von Containern, bestehend aus einem Containerchassis, das mit einem Zugfahrzeug koppelbar ist und mindestens eine Achse mit Laufrädern zur Abstützung auf der Fahrbahn aufweist, wobei ein als Auflagerahmen für einen Container ausgestalteter Schlitten mittels Rollen auf dem Containerchassis derart gelagert ist, dass durch eine Verlagerung des Schlittens die Relativposition zwischen dem Containerchassis und dem abzustützenden Container veränderbar ist, **dadurch gekennzeichnet,**
**dass** an dem in Fahrtrichtung vorderen Abschnitt des Containerchassis zwei Verriegelungen angeordnet sind, mit denen ein aufzunehmender Container ständig arretierbar ist und dass am hinteren Abschnitt des Containerchassis ein auf mindestens zwei Rollschienen gelagerter Schlitten (2) geführt wird, wobei die Rollschienen an mindestens einem Hauptträger des Containerchassis abgestützt sind und wobei die Rollschienen und der Schlitten (2) derart angeordnet sind, dass sie nach Absenkung der zugeordneten Luftfederung (4) mit Achsrohren (1) in Wirkverbindung kommen, wodurch der Container vom Containerchassis abgehoben wird.

2. Sattelauflieger nach Anspruch 1, **dadurch gekennzeichnet,**
**dass** dem Containerchassis eine Arretiervorrichtung zur Lagefixierung des Mittelausschubes zugeordnet ist.

3. Sattelauflieger nach Anspruch 2, **dadurch gekennzeichnet,**
**dass** die Arretiervorrichtung Verriegelungszylinder (6) aufweist, die mit kongruenten Ausnehmungen am Mittelausschub in Wirkverbindung bringbar sind.

4. Sattelauflieger nach Anspruch 1, **dadurch gekennzeichnet,**
**dass** die beiden vorderen Containerverriegelungen derart ausgestaltet sind, dass über diese Verbindung ausgehend vom Zugfahrzeug über den vorderen Abschnitt des Containerchassis der Kraftfluss zum Container zur Verschiebung aufgebracht wird.

5. Sattelauflieger nach Anspruch 1, **dadurch gekennzeichnet,**
**dass** dem Containerchassis ein Pneumatikzylinder (5) zur Verlagerung des Schlittens (2) in unterschiedliche Relativpositionen gegenüber dem Containerchassis zugeordnet ist.

6. Sattelauflieger nach Anspruch 1, **dadurch gekennzeichnet,**
**dass** dem Containerchassis eine Bedieneinheit zugeordnet ist, über die ein Bediener die zur Verschiebung des Containers notwendigen Stellbewegungen und Arretiervorgänge auslösen kann.
